# EUROPEAN PATENT SPECIFICATION

(11) **EP 3 371 496 B1**
(45) Date of publication and mention of the grant of the patent: **30.12.2020**
(21) Application number: 16819713.5
(22) Date of filing: 04.11.2016
(51) Int. Cl.: F16J 15/00, F16K 1/42, F16K 3/24, F16K 37/00

(54) **ASSEMBLY FOR START-UP TESTING FLUID FLOW CONTROL DEVICES AT VARIOUS PRESSURES AND TEMPERATURES**
ANORDNUNG ZUM HOCHFAHREN VON PRÜFSTRÖMUNGSREGLERVORRICHTUNGEN BEI VERSCHIEDENEN DRUCKWERTEN UND TEMPERATUREN
ENSEMBLE POUR TEST DE DÉMARRAGE DE DISPOSITIFS DE RÉGULATION DE DÉBIT DE FLUIDE À DIFFÉRENTES PRESSIONS ET TEMPÉRATURES

(30) Priority: 04.11.2015 US 201562251097 P
(43) Date of publication of application: 12.09.2018
(73) Proprietor: Fisher Controls International LLC, Marshalltown, IA 50158 (US)
(72) Inventor: QIU, Yan, Marshalltown, IA 50158 (US)
(74) Representative: Hernandez Lehmann, Aurelio
(86) International application number: PCT/US2016/060475
(87) International publication number: WO 2017/079525

(56) References cited:
- EP-A1- 1 408 265
- EP-A1- 2 677 219
- WO-A1-2015/142977
- US-A- 4 083 529
- US-A- 4 706 970
- US-A1- 2004 173 005
- US-A1- 2014 264 135
- US-A1- 2014 264 138
- US-B1- 6 530 261

## Description

### FIELD OF THE DISCLOSURE

The present disclosure generally relates to fluid flow control devices and, more particularly, to an assembly for use in performing start-up testing on fluid flow devices at various pressures and temperatures.

### BACKGROUND

Process control systems typically include various components for controlling various process parameters. For example, a fluid process control system may include a plurality of control valves for controlling flow rate, temperature, and/or pressure of a fluid flowing through the system. The end product is dependent on the accuracy of the control of these parameters, which is, in turn, dependent on the geometry and characteristics of the control valves. Control valves are, for example, specifically designed and selected to provide for particular flow capacities and pressure changes. When these characteristics are compromised, the quality of the end product may be affected.

To ensure that the quality of the end product is not affected, the various components of a process control system are tested during start-up, i.e., prior to being deployed for operation. For example, components such as control valves, pipelines, plumbing, gas tanks, and other pressure vessels are, prior to being deployed, typically subjected to hydrostatic testing whereby the component (e.g., the control valve, the pipeline) is filled with one or more liquids (e.g., water, oil) at room temperature (e.g., 21°C (70°F)), or another substantially similar temperature, to test the strength of the component and identify any leaks therein. In some cases, e.g., when those components are to be utilized in high-temperature environments and/or where high-pressure drops, it may also desirable to subject these components to start-up testing using fluids, e.g., steam, at or having significantly higher temperatures (e.g., temperatures in excess of 38°C (100°F), 93°C (200°F), 260°C (500°F), 538°C (1000°F), or even 649 or 677°C (1200 or 1250°F)). -In yet other cases, e.g., when those components are to be utilized in extremely low-temperature environments, it may be desirable to subject these components to start-up testing using fluids at or having very low temperatures (e.g., below 21°C (70°F), below 0°C (32°F), cryogenic temperatures). It may also be desirable to subject these components to extremely high pressures, extremely low pressures, other pressures, and/or significant pressure drops.

However, equipment that is conventionally used to perform hydrostatic testing often includes components, e.g., rubber or plastic seals, that are not built to withstand higher temperatures, high pressure drops, and/or extremely low temperatures, such that the equipment is not operable across the whole range of temperatures and/or pressures needed to properly test the process control system component prior to operation (i.e., properly start-up test the process control system component).

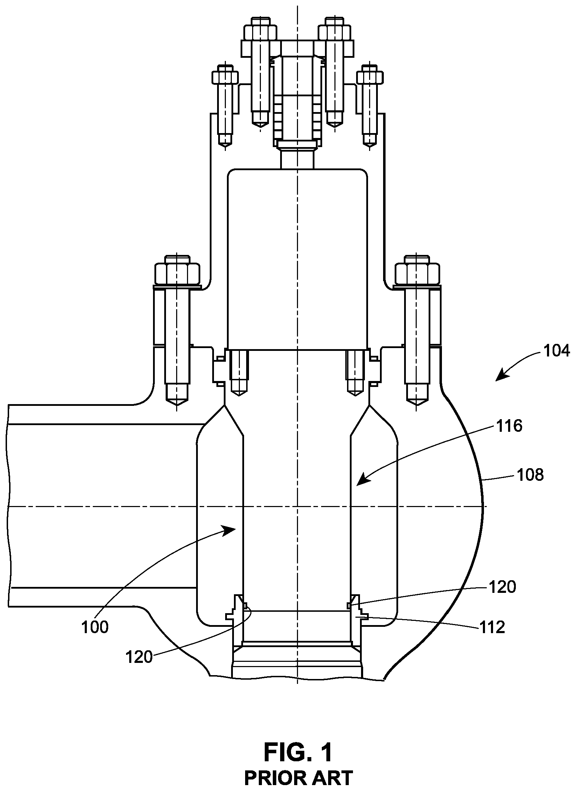

FIG. 1 illustrates an example of such a conventional device, in the form of a fixture 100, which can be used to perform hydrostatic testing on a control valve 104 having a valve body 108 and a valve seat 112 disposed in the valve body 108. The fixture 100, which when employed replaces the valve plug and the valve cage of the control valve 104, includes a plug 116 and a rubber or plastic o-ring 120 arranged at one end 124 of the plug 116. The plug 116 is disposed in the valve body 108 such that a portion of the plug 116 and the o-ring 120 engage the valve seat 112. When arranged in this manner, an end user of the control valve 104 may perform hydrostatic testing on the control valve 104 and any other pressure vessels within the process control system using fluids at room temperature (e.g., 21°C (70°F)) or other similar temperatures (e.g., temperatures between 0°C (32°F) and 38°C (100°F)). But, because the o-ring 120 is made of plastic or rubber, which may extrude, disintegrate, or otherwise fail in response to temperatures in excess of 232°C (450°F), cryogenic temperatures, high pressures, and high pressure drops, for example, the fixture 100 cannot be used for start-up testing on the control valve 104 using fluids (e.g., steam) at or having such temperatures and/or when subjected to high pressures and/or high pressure drops. As a result, the fixture 100 must be removed and different equipment used, and/or different tests employed to properly test the control valve 104, prior to operation, at such different temperatures.

US 2004/173005 A1 discloses a portable air pressure decay test apparatus for leak testing of a sealed system includes a hollow housing, an air pump having an inlet and an outlet disposed in the housing, and a controller disposed in the housing and connected to the pump for controlling the operation of the pump. A test head is mounted on the housing for releasably attaching to an attachment point of a sealed system.

WO 2015/142977 A1 discloses a bi-directional seal assembly for use with valves. Operational temperatures of the process fluids used to determine the type of valve and valve components that may be used such as, for example, the types of seals that may be used to effect a seal, are described between -73°C and 232°C (-100°F and 450°F).

US 2014/264135 A1 discloses a valve seat apparatus for use with fluid valves that enables interchangeability between different types of sealing assemblies for use with process fluids of widely varying temperatures e.g., -198°C to 593°C (-325° F. to 1100° F.).

EP 1408265 A1 discloses a seal assembly for use with a valve having a trim cage with an inner surface extending along in axis and a plug sized to fit inside the trim cage inner surface, wherein the plug is adapted to move along the axis thereof. A seal ring is attached to an upstream portion of the cage to effectuate a seal with the plug. The plug is equipped with a wiper such that the wiper seal material substantially maintains rigidity and resilience in process temperatures of at least 232°C (450° F).

US 4083529 A discloses a valve having a plate-type closure element and comprising a valve body 50 having an axis W--W in which there is formed a seat 51. The latter has a closure element 52 used in valves having a plate-type closure element. More particularly, the closure element 52 includes a disc 53 and a clamping ring 54 coaxial with the axis W--W and rendered integral with each other by a central screw screwed in a tapped hole formed in the disc 53. The ring 54 has means for coupling the closure element to an actuating device which permits selectively raising it off and moving it toward its seat 51.

### SUMMARY

In accordance with a first aspect, an assembly according to claim 1 is provided for performing start-up testing on a fluid flow control device having a valve body defining an inlet, an outlet, and a fluid flow path extending between the inlet and the outlet, and valve seat disposed within the valve body and defining an orifice through which the fluid flow path passes. The assembly includes a retainer adapted to be disposed in the valve body, and a sealing assembly coupled to a portion of the retainer and adapted to be disposed adjacent the valve seat. The sealing assembly includes one or more sealing elements configured to provide a seal during start-up testing at a service temperature of between approximately -198°C (-325°F), and approximately 677°C (1250°F).

In accordance with a second aspect, a fluid flow control device according to claim 9 is provided that includes a valve body defining an inlet, an outlet, and a fluid flow path extending between the inlet and the outlet, a valve seat disposed within the valve body and defining an orifice through which the fluid flow path passes, and an assembly configured to be removably coupled to the fluid flow control device for performing start-up testing on the fluid flow control device. The assembly includes a retainer adapted to be disposed in the valve body, and a sealing assembly coupled to a portion of the retainer and adapted to be disposed adjacent the valve seat. The sealing assembly includes one or more sealing elements configured to provide a seal during start-up testing at a service temperature of between approximately -198°C (-325°F), and approximately 677°C (1250°F).

In accordance with a third aspect, a method of start-up testing a fluid flow control device according to claim 11 is provided. The fluid flow control device has a valve body defining an inlet, an outlet, and a fluid flow path extending between the inlet and the outlet, and a valve seat disposed within the valve body and defining an orifice through which the fluid flow path passes. The method includes: (1) coupling an assembly to the fluid flow control device, the assembly includes a retainer coupled to a portion of the valve body and a sealing assembly coupled to a portion of the retainer, the sealing assembly comprising one or more sealing elements; (2) performing, when the assembly is coupled to the fluid flow control device, a first portion of the start-up testing at a service temperature of between approximately -18°C (0°F) and approximately 93°C (200°F); (3) performing, when the assembly is coupled to the fluid flow control device, a second portion of the hydrostatic testing at a service temperature of one of (i) between approximately 232°C (450°F) and approximately 677°C (1250°F) and (ii) between Z -198°C (-325°F) and approximately -73°C (-100°F), the second portion being performed subsequent to the first portion; and (4) removing the assembly from the fluid flow control device.

In further accordance with any one or more of the foregoing first, second, or third exemplary aspects, an assembly, a fluid flow control device, or a method of start-up testing may include any one or more of the following further preferred forms.

According to the invention, the sealing assembly is threaded to the retainer proximate to an end of the retainer.

In another preferred form, the sealing assembly is arranged to effectuate a single or bi-directional seal during the hydrostatic testing.

According to the invention, the sealing assembly includes a first sealing element, a second sealing element, and a spacer disposed between the first and second sealing elements.

In another preferred form, the first and second sealing elements are arranged to effectuate a bi-directional seal during the hydrostatic testing.

According to the invention, the first sealing element includes a first C-seal and the second sealing element includes a second C-seal.

In another preferred form, the first sealing element faces a first direction and the second sealing element faces a second direction opposite the first direction.

In another preferred form, a mouth of the first sealing element faces the first direction and a mouth of the second sealing element faces the second direction.

In another preferred form, the mouth of each of the first and second sealing elements faces the spacer.

In another preferred form, the mouth of the first sealing element is aligned with the mouth of the second sealing element along a common longitudinal axis.

In another preferred form, the spacer comprises one or more holes configured to facilitate pressure flow toward the first sealing element and/or the second sealing element during the start-up testing.

In another preferred form, the spacer is disposed in contact with each of the first and second sealing elements.

In another preferred form, the mouth of the first sealing element is aligned with the mouth of the second sealing element along a longitudinal axis of the retainer.

### BRIEF DESCRIPTION OF THE DRAWINGS

FIG. 1 is a cross-sectional view of a conventional fixture used to perform hydrostatic testing on a control valve.
FIG. 2 is a cross-sectional view of an assembly constructed in accordance with the teachings of an example of the present invention and utilized in combination with a first example of a fluid flow control device to perform testing of the fluid flow control device at various temperatures and pressures.
FIG. 3 is an enlarged, partial cross-sectional view of a bottom-left portion of FIG. 2.
FIG. 4 is a cross-sectional view of the assembly of FIGS. 2 and 3 but utilized in combination with a second example of a fluid flow control device to perform testing of the fluid flow control device at various temperatures and pressures.
FIG. 5 is an enlarged, partial cross-sectional view of a bottom-left portion of FIG. 4.

### DETAILED DESCRIPTION

The present disclosure is directed to an assembly for use in testing a fluid flow control device over a wide range of temperatures and pressures prior to operation of the fluid flow control device. The assembly can, on one hand, be used to perform hydrostatic testing on the fluid flow control device using one or more liquids (e.g., water, oil) at room temperature (i.e., approximately 21°c (70°F)). At the same time, the assembly 200 can be used to perform start-up testing on the fluid flow control device using one or more fluids (e.g., steam, liquids) at or having higher temperatures (e.g., temperatures in excess 21°C (70°F), temperatures in excess of 232°C (450°F), temperatures in excess of 538°C (1000°F), at or having extremely low temperatures (e.g., temperatures below °C (32°F), temperatures below -18°C (0°F), cryogenic temperatures), and/or subject to high pressures and significant pressure drops.

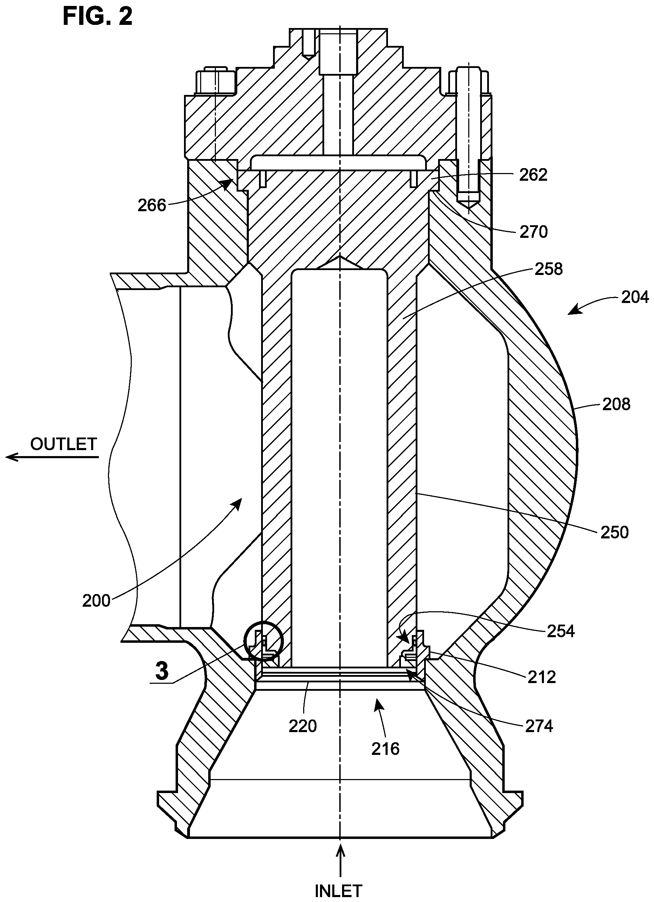

FIG. 2 illustrates one example of an assembly 200 constructed in accordance with the principles of the present disclosure. In FIG. 2, the assembly 200 is coupled to a fluid flow control device 204, which in this example takes the form of a sliding-stem type control valve (e.g., a TBX Steam Conditioning Valve, manufactured by Emerson Process Management), for start-up testing on the fluid flow control device 204. In other examples, the assembly 200 can alternatively be employed in connection with a different type of sliding-stem type control valve (e.g., a CVX Steam Conditioning Valve, also manufactured by Emerson Process Management), a different type of control valve (e.g., a rotary control valve, an isolation valve, etc.) or a wholly different type of fluid flow control device. It will also be appreciated that it is conceivable that the assembly 200 can instead be used to perform testing of the fluid flow control device 204 after start-up, i.e., after initial operation, at, e.g., a regularly scheduled testing interval.

As illustrated in FIG. 2, the control valve 204 includes a valve body 208 and a valve seat 212 disposed in the valve body 208. While only partially visible in FIG. 2, the valve body 208 defines an inlet port, an outlet port, and a fluid flow path 216 extending between the inlet port and the outlet port. The valve seat 212 in this example takes the form of an annular seat ring welded to a portion of the body 208, though it will be appreciated that the valve seat can take other forms and/or can be threaded, bolted, clamped, or otherwise secured to the body 208. The valve seat 212 defines an orifice 220 through which the fluid flow path 216 passes (and through which fluid flow passes when the valve 204 is operational). As in this example the assembly 200 is being used to perform start-up testing on the fluid flow control device 204, the fluid flow control device 204 illustrated in FIG. 2 does not include a valve cage, a valve plug, or a valve stem; instead these components (and any other desired components, e.g., an actuator, a diffuser) are coupled to the fluid flow control device 204 following the completion of start-up testing and following the removal of the assembly 200 from the device 204.

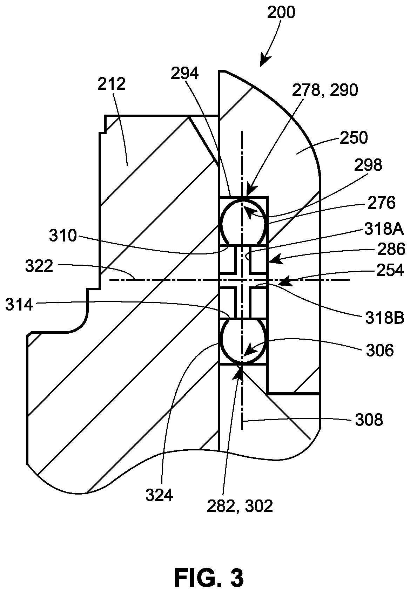

As illustrated in FIGS. 2 and 3, the assembly 200 includes a retainer 250 and a sealing assembly 254 coupled to a portion of, and retained in place by, the retainer 250. The retainer 250 has a substantially annular body 258 and an outwardly extending annular flange 262 at a first end 266 of the retainer 250. The flange 262 is disposed or seated on an annular shoulder 270 of the valve body 208, with the substantially annular body 258 extending or hanging downwardly (at least when viewed in FIG. 2) into an interior of the valve body 208, such that a second end 274 of the retainer 250, which is opposite the first end 266, is disposed immediately adjacent the valve seat 212. The sealing assembly 254 is generally coupled to the retainer 250 at a position proximate to the second end 274 of the retainer 250. More specifically, the sealing assembly 254 is threaded to an exterior surface 276 of the retainer 250 via a recess or gland defined or formed in the retainer 250 proximate to the second end 274 of the retainer 250. Because the second end 274 of the retainer 250 is disposed immediately adjacent the valve seat 212, the sealing assembly 254 is also disposed immediately adjacent the valve seat 212, as illustrated in FIGS. 2 and 3.

With reference now to FIG. 3, the sealing assembly 254 includes a first sealing element 278, a second sealing element 282, and a spacer 286 disposed between the first and second sealing elements 278, 282. The first sealing element 278 takes the form of a C-seal 290 made of a corrosion-resistant metal, such as, for example N07718 (Inconel 718), capable of withstanding a wide range of temperatures and pressures. The C-seal 290 is threaded to the exterior surface 276 of the retainer 250 proximate to a shoulder portion 294 of the retainer 250, with a mouth 298 of the C-seal 290 facing a first direction (in this case, downwardly toward the inlet port). The second sealing element 282 takes the form of a C-seal 302 that is also made of a corrosion-resistant metal, such as, for example, N07718 (Inconel 718), capable of withstanding a wide range of temperatures and pressures. The C-seal 302 is, like the C-seal 290, threaded to the exterior surface 276 of the retainer 250, but is threaded to the retainer 250 such that a mouth 306 of the C-seal 302 faces a second direction opposite the first direction (in this case, upwardly toward the first end 266 of the retainer 250). In other words, the C-seals 290, 302 are, at least in this example, oriented in opposite directions. The C-seals 290, 302 are, however, aligned with one another along a common longitudinal axis 308.

The spacer 286 has a top surface 310 disposed immediately adjacent (e.g., in contact with) the C-seal 290 and a bottom surface 314 opposite the top surface 310 and disposed immediately adjacent (e.g., in contact with) the C-seal 302. The spacer 286 also includes one or more holes drilled or otherwise formed therethrough to route pressure to the C-seal 290 and/or the C-seal 302 so as to assist in sealing. In this example, the spacer 286 includes a pair of holes 318A, 318B arranged to facilitate balanced pressure distribution amongst or between the C-seal 290 and the C-seal 302. The hole 318A extends along the longitudinal axis 308, while the other hole 318B extends along a transverse axis 322 oriented perpendicular to the longitudinal axis 308.

It will be appreciated that the retainer 250 can vary in shape, size, and/or construction, and/or can be coupled to the valve body 208 in a different manner. For example, the retainer 250 can be threaded, bolted, or otherwise secured to the valve body 208 in addition, or as an alternative, to the flange 262 being disposed or seated on the shoulder 270 of the valve body. The sealing assembly 254 can also or alternatively vary in shape, size, and/or construction, and/or can be coupled to the retainer 250 in a different manner. As an example, the first and/or second sealing elements 278, 282 can take the form of an E-shaped seal ring, a U-shaped seal ring, and/or some differently shaped metal seal ring. As another example, the sealing assembly 254 may include more than two sealing elements. As a further example, e.g., when only single direction shutoff is required, the sealing assembly 254 may only include one sealing element (the first or second sealing element 278, 282); in such a case, the assembly 200 may or may not include the spacer 286, and if it does, the spacer 286 may or may not include the holes 318A and/or 318B.

In any event, when the sealing assembly 254 is coupled to the retainer 250 and the retainer 250 is coupled to the valve body 208, the elements of the sealing assembly 254 - the first sealing element 278, the second sealing element 282, and the spacer 286 - are disposed between the exterior portion 276 of the retainer 250 and a radially inwardly extending surface 324 of the valve seat 212. So arranged, when start-up testing is performed on the control valve 204, and fluid and/or pressure flows into the control valve 204 via the inlet port or the outlet port, the sealing assembly 254 provides a bi-directional seal that prevents upstream and downstream fluid and pressure. Beneficially, as discussed above, the sealing assembly 254 provides such a seal across the wide range of temperatures and pressures needed to properly test the control valve 204 prior to operation. More specifically, the sealing assembly 254 provides such a seal when start-up testing is performed using fluids at or having a wide range of temperatures, including extremely low temperatures (e.g., cryogenic temperatures), extremely high temperatures (e.g., temperatures above 232°C (450°F), temperatures above 538°C (1000°F), temperatures above 649 or 677°C (1200 or 1250°F)), other temperatures (e.g., temperatures therebetween), and subject to a wide range of pressures, including very low pressures, very high pressures, and large pressure changes or drops. The same sealing assembly 254 can thus be used when performing start-up testing on the control valve 204, thereby eliminating the need for additional equipment.

As briefly discussed above, when the end-user of the control valve 204 has completed start-up testing, the assembly 200 can be easily and quickly removed from the valve body 208 of the control valve 204. In turn, a valve cage, a valve plug, and a valve stem, as well as any other desired components, can be installed within the control valve 204. Once installed, those components would operate in a known manner, so further details are not discussed herein.

Finally, while the sealing assembly 254 is implemented in connection with the assembly 200 for the purpose of performing start-up testing on the control valve 204, it will be appreciated that the sealing assembly 254 can be incorporated into a valve cage or a valve plug of the control valve 204 for the purpose of effectuating a bi-directional seal, when the control valve 204 is operational, over a full temperature range of between approximately -198°C (-325°F) and approximately 593°C (1100°F).

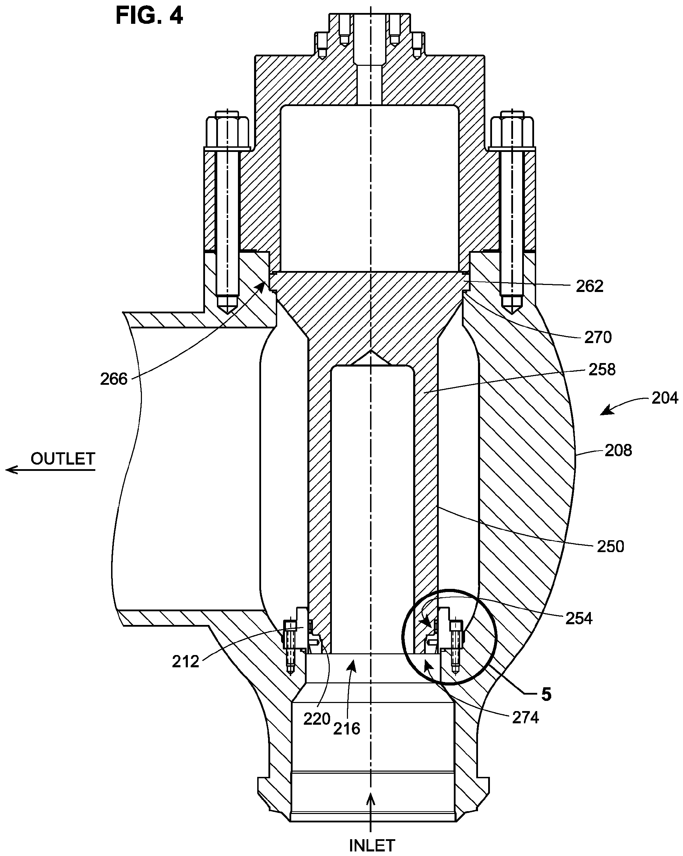

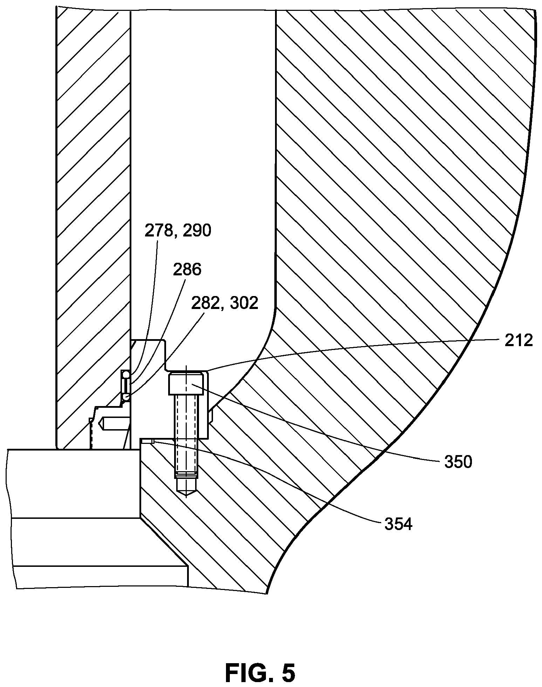

FIGS. 4 and 5 depict the assembly 200 coupled to a fluid flow control device 204 that is substantially similar to, but slightly different than, the fluid flow control device of FIGS. 2 and 3, with common reference numerals used to depict common components. Unlike the fluid flow control device 204 of FIGS. 2 and 3, wherein the seat ring 212 is welded to the body 208, in the fluid flow control device 204 shown in FIGS. 4 and 5, the seat ring 212 is bolted to the body 208 using a plurality of screws 350. Accordingly, a sealing element 354, which in this example takes the form of an annular gasket, is arranged between opposing surfaces of the valve body 208 and the seat ring 212 so as to effectuate a seal therebetween.

## Claims

1. An assembly (200) for performing start-up testing on a fluid flow control device (204) having a valve body (208) defining an inlet, an outlet, and a fluid flow path (216) extending between the inlet and the outlet, and a valve seat (212) disposed within the valve body and defining an orifice (220) through which the fluid flow path passes, the assembly comprising:
a retainer (250) adapted to be disposed in the valve body; and
a sealing assembly (254) coupled to a portion of the retainer and adapted to be disposed adjacent the valve seat, **characterized in that**
the sealing assembly (254) is threaded to the retainer (250) proximate to an end (274) of the retainer, and **in that**
the sealing assembly comprises a first sealing element (278), a second sealing element (282), and a spacer (286) disposed between the first and second sealing elements such that the sealing assembly is configured to provide a seal during start-up testing at all service temperatures between approximately -198 degrees Celsius (-325 degrees Fahrenheit) and approximately 677 degrees Celsius (1250 degrees Fahrenheit),
wherein the first sealing element comprises a first C-seal (290) and the second sealing element comprises a second C-seal (302) and wherein the first C-seal (290) and the second C-seal (302) are each made of a corrosion-resistant metal.

2. The assembly (200) of claim 1, wherein the first and second sealing elements are arranged to effectuate a bi-directional seal during the start-up testing.

3. The assembly (200) of any of the preceding claims, wherein the first sealing element faces a first direction and the second sealing element faces a second direction opposite the first direction.

4. The assembly (200) of any of the preceding claims, wherein a mouth (298) of the first sealing element faces the first direction and a mouth (306) of the second sealing element faces the second direction.

5. The assembly (200) of any of the preceding claims, wherein the mouth of each of the first and second sealing elements faces the spacer.

6. The assembly (200) of any of the preceding claims, wherein the mouth of the first sealing element is aligned with the mouth of the second sealing element along a common longitudinal axis (308).

7. The assembly (200) of any of the preceding claims, wherein the spacer comprises one or more holes (318A, 318B) configured to facilitate pressure flow toward the first sealing element and/or the second sealing element during the start-up testing.

8. The assembly (200) of any of the preceding claims, wherein the spacer is disposed in contact with each of the first and second sealing elements.

9. A fluid flow control device (204), comprising:
a valve body (208) defining an inlet, an outlet, and a fluid flow path (216) extending between the inlet and the outlet;
a valve seat (212) disposed within the valve body and defining an orifice (220) through which the fluid flow path passes; and
the assembly (200) of claim 1, wherein the assembly is configured to be removably coupled to the fluid flow control device for performing the start-up testing on the fluid flow control device.

10. The fluid flow control device (204) of claim 9, wherein the retainer (250) is disposed in contact with each of first and second sealing elements (278, 282).

11. A method of start-up testing a fluid flow control device (204) having a valve body (208) defining an inlet, an outlet, and a fluid flow path (216) extending between the inlet and the outlet, and a valve seat (212) disposed within the valve body and defining an orifice (220) through which the fluid flow path passes, the method comprising:
coupling the assembly (200) of claim 1 to the fluid flow control device, the retainer (250) coupled to a portion of the valve body;
performing, when the assembly is coupled to the fluid flow control device, a first portion of the start-up testing at a service temperature of between approximately -18 degrees Celsius (0 degrees Fahrenheit) and approximately 93 degrees Celsius (200 degrees Fahrenheit);
performing, when the assembly is coupled to the fluid flow control device, a second portion of the hydrostatic testing at a service temperature of one of (i) between approximately 232 degrees Celsius (450 degrees Fahrenheit) and approximately 377 degrees Celsius (1250 degrees Fahrenheit) and (ii) between -198 degrees Celsius (-325 degrees Fahrenheit) and approximately -73 degrees Celsius (-100 degrees Fahrenheit), the second portion being performed subsequent to the first portion; and then
removing the assembly from the fluid flow control device.

## Patentansprüche

1. Anordnung (200) zur Durchführung von Anlauftests an einer Fluidstromsteuerungsvorrichtung (204) mit einem Ventilkörper (208), der einen Einlass, einen Auslass und eine sich zwischen dem Einlass und dem Auslass erstreckende Fluidströmungsbahn (216) definiert, und einem Ventilsitz (212), der in dem Ventilkörper angeordnet ist und eine Öffnung (220) definiert, durch die die Fluidströmungsbahn geht, wobei die Anordnung Folgendes umfasst:
eine Festhaltevorrichtung (250), die dazu ausgeführt ist, in dem Ventilkörper angeordnet zu sein, und
eine Dichtungsanordnung (254), die an einen Abschnitt der Festhaltevorrichtung gekoppelt und dazu ausgeführt ist, dem Ventilsitz benachbart angeordnet zu sein, **dadurch gekennzeichnet, dass** die Dichtungsanordnung (254) in der Nähe eines Endes (274) der Festhaltevorrichtung an die Festhaltevorrichtung (250) geschraubt ist und dass die Dichtungsanordnung ein erstes Dichtungselement (278), ein zweites Dichtungselement (282) und einen zwischen dem ersten und dem zweiten Dichtungselement angeordneten Abstandhalter (286) umfasst, so dass die Dichtungsanordnung dazu ausgestaltet ist, während des Anlauftestens bei allen Gebrauchstemperaturen zwischen ungefähr -198 Grad Celsius (-325 Grad Fahrenheit) und ungefähr 677 Grad Celsius (1250 Grad Fahrenheit) für eine Abdichtung zu sorgen,
wobei das erste Dichtungselement eine erste C-Dichtung (290) umfasst und das zweite Dichtungselement eine zweite C-Dichtung (302) umfasst und wobei die erste C-Dichtung (290) und die zweite C-Dichtung (302) jeweils aus einem korrosionsfesten Metall hergestellt sind.

2. Anordnung (200) nach Anspruch 1, wobei das erste und das zweite Dichtungselement dazu ausgestaltet sind, während des Anlauftestens eine bidirektionale Abdichtung zu bewirken.

3. Anordnung (200) nach einem der vorhergehenden Ansprüche, wobei das erste Dichtungselement in eine erste Richtung weist und das zweite Dichtungselement in eine zweite Richtung weist, die der ersten Richtung entgegengesetzt ist.

4. Anordnung (200) nach einem der vorhergehenden Ansprüche, wobei eine Mündung (298) des ersten Dichtungselements in die erste Richtung weist und eine Mündung (306) des zweiten Dichtungselements in die zweite Richtung weist.

5. Anordnung (200) nach einem der vorhergehenden Ansprüche, wobei die Mündung jeweils des ersten und des zweiten Dichtungselements dem Abstandhalter zugewandt ist.

6. Anordnung (200) nach einem der vorhergehenden Ansprüche, wobei die Mündung des ersten Dichtungselements auf die Mündung des zweiten Dichtungselements entlang einer gemeinsamen Längsachse (308) ausgerichtet ist.

7. Anordnung (200) nach einem der vorhergehenden Ansprüche, wobei der Abstandhalter ein oder mehrere Löcher (318A, 318B) umfasst, die dazu ausgestaltet sind, den Druckverlauf während des Anlauftestens zu dem ersten Dichtungselement und/oder dem zweiten Dichtungselement hin zu ermöglichen.

8. Anordnung (200) nach einem der vorhergehenden Ansprüche, wobei der Abstandhalter in Kontakt mit jedem des ersten und des zweiten Dichtungselements angeordnet ist.

9. Fluidstromsteuerungsvorrichtung (204), umfassend:
einen Ventilkörper (208), der einen Einlass, einen Auslass und eine sich zwischen dem Einlass und dem Auslass erstreckende Fluidströmungsbahn (216) definiert,
einen Ventilsitz (212), der in dem Ventilkörper angeordnet ist und eine Öffnung (220) definiert, durch die die Fluidströmungsbahn geht, und
die Anordnung (200) nach Anspruch 1, wobei die Anordnung dazu ausgestaltet ist, zur Durchführung des Anlauftestens an der Fluidstromsteuerungsvorrichtung entfernbar an die Fluidstromsteuerungsvorrichtung gekoppelt zu werden.

10. Fluidstromsteuerungsvorrichtung (204) nach Anspruch 9, wobei die Festhaltevorrichtung (250) in Kontakt mit jedem des ersten und des zweiten Dichtungselements (278, 282) angeordnet ist.

11. Verfahren zum Anlauftesten einer Fluidstromsteuerungsvorrichtung (204) mit einem Ventilkörper (208), der einen Einlass, einen Auslass und eine sich zwischen dem Einlass und dem Auslass erstreckende Fluidströmungsbahn (216) definiert, und einem Ventilsitz (212), der in dem Ventilkörper angeordnet ist und eine Öffnung (220) definiert, durch die die Fluidströmungsbahn geht, wobei das Verfahren Folgendes umfasst:
Koppeln der Anordnung (200) nach Anspruch 1 an die Fluidstromsteuerungsvorrichtung, wobei die Festhaltevorrichtung (250) an einen Abschnitt des Ventilkörpers gekoppelt ist,
Durchführen eines ersten Abschnitts des Anlauftestens bei einer Gebrauchstemperatur zwischen ungefähr -18 Grad Celsius (0 Grad Fahrenheit) und ungefähr 93 Grad Celsius (200 Grad Fahrenheit), wenn die Anordnung an die Fluidstromsteuerungsvorrichtung gekoppelt ist,
Durchführen eines zweiten Abschnitts des hydrostatischen Testens bei einer Gebrauchstemperatur (i) zwischen ungefähr 232 Grad Celsius (450 Grad Fahrenheit) und ungefähr 377 Grad Celsius (1250 Grad Fahrenheit) und (ii) zwischen -198 Grad Celsius (-325 Grad Fahrenheit) und ungefähr -73 Grad Celsius (-100 Grad Fahrenheit), wenn die Anordnung an die Fluidstromsteuerungsvorrichtung gekoppelt ist, wobei der zweite Abschnitt nach dem ersten Abschnitt durchgeführt wird, und dann
Entfernen der Anordnung von der Fluidstromsteuerungsvorrichtung.

## Revendications

1. Ensemble (200) pour effectuer un test de démarrage sur un dispositif de régulation de débit de fluide (204) ayant un corps de soupape (208) définissant une entrée, une sortie, et un chemin d'écoulement de fluide (216) s'étendant entre l'entrée et la sortie, et un siège de soupape (212) disposé à l'intérieur du corps de soupape et définissant un orifice (220) à travers lequel passe le chemin d'écoulement de fluide, l'ensemble comprenant :
un dispositif de retenue (250) prévu pour être disposé dans le corps de soupape ; et
un ensemble d'étanchéité (254) accouplé à une portion du dispositif de retenue et prévu pour être disposé à côté du siège de soupape, **caractérisé en ce que**
l'ensemble d'étanchéité (254) est vissé sur le dispositif de retenue (250) à proximité d'une extrémité (274) du dispositif de retenue, et **en ce que**
l'ensemble d'étanchéité comprend un premier élément d'étanchéité (278), un deuxième élément d'étanchéité (282), et un élément d'espacement (286) disposé entre les premier et deuxième éléments d'étanchéité de telle sorte que l'ensemble d'étanchéité soit configuré pour fournir un joint au cours d'un test de démarrage à toutes les températures de service entre approximativement -198 degrés Celsius (-325 degrés Fahrenheit) et approximativement 677 degrés Celsius (1250 degrés Fahrenheit),
le premier élément d'étanchéité comprenant un premier joint en forme de C (290) et le deuxième élément d'étanchéité comprenant un deuxième joint en forme de C (302) et le premier joint en forme de C (290) et le deuxième joint en forme de C (302) étant chacun fabriqués en métal résistant à la corrosion.

2. Ensemble (200) selon la revendication 1, dans lequel les premier et deuxième éléments d'étanchéité sont disposés de manière à constituer un joint bidirectionnel au cours du test de démarrage.

3. Ensemble (200) selon l'une quelconque des revendications précédentes, dans lequel le premier élément d'étanchéité est orienté dans une première direction et le deuxième élément d'étanchéité est orienté dans une deuxième direction opposée à la première direction.

4. Ensemble (200) selon l'une quelconque des revendications précédentes, dans lequel une embouchure (298) du premier élément d'étanchéité est orientée dans la première direction et une embouchure (306) du deuxième élément d'étanchéité est orientée dans la deuxième direction.

5. Ensemble (200) selon l'une quelconque des revendications précédentes, dans lequel l'embouchure de chacun des premier et deuxième éléments d'étanchéité est orientée vers l'élément d'espacement.

6. Ensemble (200) selon l'une quelconque des revendications précédentes, dans lequel l'embouchure du premier élément d'étanchéité est alignée avec l'embouchure du deuxième élément d'étanchéité le long d'un axe longitudinal commun (308) .

7. Ensemble (200) selon l'une quelconque des revendications précédentes, dans lequel l'élément d'espacement comprend un ou plusieurs trous (318A, 318B) configurés pour faciliter l'écoulement sous pression vers le premier élément d'étanchéité et/ou le deuxième élément d'étanchéité au cours du test de démarrage.

8. Ensemble (200) selon l'une quelconque des revendications précédentes, dans lequel l'élément d'espacement est disposé en contact avec chacun des premier et deuxième éléments d'étanchéité.

9. Dispositif de régulation de débit de fluide (204), comprenant :
un corps de soupape (208) définissant une entrée, une sortie et un chemin d'écoulement de fluide (216) s'étendant entre l'entrée et la sortie ;
un siège de soupape (212) disposé à l'intérieur du corps de soupape et définissant un orifice (220) à travers lequel passe le chemin d'écoulement de fluide ; et
l'ensemble (200) selon la revendication 1, l'ensemble étant configuré pour être accouplé de manière amovible au dispositif de régulation de débit de fluide pour effectuer le test de démarrage sur le dispositif de régulation de débit de fluide.

10. Dispositif de régulation de débit de fluide (204) selon la revendication 9, dans lequel le dispositif de retenue (250) est disposé en contact avec chacun des premier et deuxième éléments d'étanchéité (278, 282) .

11. Procédé de test de démarrage d'un dispositif de régulation de débit de fluide (204) ayant un corps de soupape (208) définissant une entrée, une sortie et un chemin d'écoulement de fluide (216) s'étendant entre l'entrée et la sortie, et un siège de soupape (212) disposé à l'intérieur du corps de soupape et définissant un orifice (220) à travers lequel passe le chemin d'écoulement de fluide, le procédé comprenant :
l'accouplement de l'ensemble (200) selon la revendication 1 au dispositif de régulation de débit de fluide, le dispositif de retenue (250) étant accouplé à une portion du corps de soupape ;
la réalisation, lorsque l'ensemble est accouplé au dispositif de régulation de débit de fluide, d'une première portion du test de démarrage à une température de service entre approximativement -18 degrés Celsius (0 degré Fahrenheit) et approximativement 93 degrés Celsius (200 degrés Fahrenheit) ;
la réalisation, lorsque l'ensemble est accouplé au dispositif de régulation de débit de fluide, d'une deuxième portion du test hydrostatique à une température de service soit (i) entre approximativement 232 degrés Celsius (450 degrés Fahrenheit) et approximativement 377 degrés Celsius (1250 degrés Fahrenheit), soit (ii) entre -198 degrés Celsius (-325 degrés Fahrenheit) et approximativement -73 degrés Celsius (-100 degrés Fahrenheit), la deuxième portion étant réalisée après la première portion ; puis
l'enlèvement de l'ensemble du dispositif de régulation de débit de fluide.
